# EUROPÄISCHE PATENTANMELDUNG

(11) **EP 4 516 169 A1**
(43) Veröffentlichungstag der Anmeldung: **05.03.2025**
(21) Anmeldenummer: 24193984.2
(22) Anmeldetag: 09.08.2024
(51) Int. Cl.: A47J 31/52, A47J 31/60

(54) **KAFFEEAUTOMAT MIT EINER ERFASSUNGSVORRICHTUNG FÜR EINEN REINIGUNGSMITTELBEHÄLTER SOWIE COMPUTERPROGRAMMPRODUKT**

(30) Priorität: 28.08.2023 DE 102023208224
(71) Anmelder: BSH Hausgeräte GmbH, 81739 München (DE)
(72) Erfinder: Buchner, Albert, 83349 Palling (DE); Mirbeth, Sebastian, 83374 Traunwalchen (DE); Kochan, Alex, 83358 Seebruck (DE); Losbichler, Matthias, 84574 Taufkirchen (DE)

(57) **Zusammenfassung**

Die Erfindung betriff einen Kaffeeautomaten (1) mit einer Reinigungsvorrichtung (2), einer Steuerung und einer Erfassungsvorrichtung für einen Reinigungsmittelbehälter (3), sowie auch ein diesbezügliches Computerprogrammprodukt.

## Beschreibung

Die vorliegende Erfindung betrifft einen Kaffeeautomaten mit einer Reinigungsvorrichtung und einer Erfassungsvorrichtung für einen Reinigungsmittelbehälter sowie ein entsprechendes Computerprogrammprodukt.

Bei Kaffeeautomaten mit einer Reinigungsvorrichtung, wie sie z. B. als automatische Entkalkungsvorrichtung aus der DE 10 2011 081 010 A1 bekannt ist, rückt die eigentliche "Tätigkeit" bei einem Reinigungsvorgang eher in den Hintergrund. Denn der Automat führt die Entkalkung im Wesentlichen selbstständig durch. Dennoch ist während einer solchen Entkalkung kein Bezug von Kaffeegetränken möglich.

Zudem muss unter Umständen eine erforderliche Servicetätigkeit, z. B. eine Entkalkung, nötigenfalls zwingend durchgeführt werden, da ansonsten aus Sicherheitsgründen ein weiterer Getränkebezug maschinenseitig unterbunden wird. Die Getränkezubereitung wird in solchen Fällen erst nach einer Entkalkung wieder freigegeben, wie z. B. aus der EP 3 616 576 A1 bekannt.

Bei Kaffeeautomaten mit einer automatischen Reinigungsvorrichtung, wie sie z. B. als automatische Entkalkungsvorrichtung aus der DE 10 2011 081 010 A1 bekannt ist, werden spezielle Vorratsbehälter mit Reinigungsmittel benötigt, z.B. in Form von Reinigerkartuschen. Deren Anwesenheit und oder Füllstand wird überwacht, wie z.B. aus der DE 10 2021 205 308 B3 bekannt. Wenn jedoch eine Bedienperson bei einer erforderlichen Servicetätigkeit, z. B. einer Entkalkung, keinen entsprechenden neuen Vorratsbehälter zu Hand hat, kann der Getränkebezug maschinenseitig unterbunden bleiben, bis ein neuer Vorratsbehälter besorgt werden konnte. Dies kann sich sehr nachteilig auf den empfundenen Bedienkomfort auswirken.

Eine Aufgabe der vorliegenden Erfindung ist es daher, die genannten Nachteile zu verbessern, insbesondere einen Kaffeeautomaten mit einer Reinigungsvorrichtung weiter zu verbessern und ganz besonders den Bedienkomfort zu erhöhen.

Diese Aufgabe wird durch einen Kaffeeautomaten mit den Merkmalen des Anspruchs 1 gelöst sowie auch durch ein Computerprogrammprodukt mit den Merkmalen des Anspruchs 10. Vorteilhafte Weiterbildungen der Erfindung sind Gegenstand der abhängigen Ansprüche.

Demgemäß weist der Kaffeeautomat eine Reinigungsvorrichtung, eine Steuerung und eine Erfassungsvorrichtung für einen Reinigungsmittelbehälter auf. Erfindungsgemäß ist die Steuerung eingerichtet und programmiert, den Kaffeeautomaten in einem Sondermodus weiter zu betreiben, wenn die Erfassungsvorrichtung keinen oder einen nicht ausreichend gefüllten und/oder abgelaufenen Reinigungsmittelbehälter erfasst. Dadurch kann ein maschinenseitiges Unterbinden eines Getränkebezugs, bis ein neuer Vorratsbehälter besorgt werden konnte, verhindert werden. Denn in einem Normalmodus wäre ein Weiterbetrieb mit diesem Erfassungsergebnis nicht möglich. Durch den Betrieb in einem Sondermodus ist jedoch das Fehlen des neuen Reinigungsmittelbehälters deutlicher wahrnehmbar und ein Lerneffekt für ein zukünftiges Bevorraten eines neuen Reinigungsmittelbehälters angelegt. Durch den weiterbetrieb in Sondermodus kann auch ein Menü sehr einfach angepasst sein, so dass die Bedienperson sehr einfach erkennen kann, welche Optionen nun verfügbar sind, und welche ggf. nicht. Dadurch kann die Bedienung auch in einem solchen Fall vereinfacht werden.

Mit der Erfassungsvorrichtung kann z.B. über einen Reed-Kontakt oder ähnliches erfasst werden, ob kein Reinigungsmittelbehälter vorhanden ist, oder über einen Doppel-Reed-Kontakt oder ähnliches erfasst werden, dass der Reinigungsmittelbehälter nicht ausreichend gefüllten ist, oder über eine RFID-basierte Vorrichtung oder ähnliches erfasst werden, ob der Reinigungsmittelbehälter bzw. sein Inhalt abgelaufen ist.

Unter einer Reinigungsvorrichtung soll hier insbesondere eine Automatische Reinigungsvorrichtung für eine Brüheinheit des Kaffeeautomaten verstanden werden, jedoch ebenso eine automatische Entkalkungsvorrichtung für ein Fluidsystem des Kaffeeautomaten sowie eine automatische Pflegevorrichtung für Teile des Fluidsystems, oder jegliche Kombinationen daraus.

Bei einer vorteilhaften Weiterbildung der erfindungsgemäßen Lösung ist die Steuerung so programmiert, dass im Sondermodus zumindest ein zusätzlicher Menüpunkt in einem Auswahlmenü verfügbar ist. Dadurch kann eine Bedienperson gezielt in Richtung der zusätzlichen Menüpunkte im Sondermodus gelenkt werden und die Bedienung im Sondermodus somit erleichtert werden.

Bei einer weiteren vorteilhaften Weiterbildung der erfindungsgemäßen Lösung ist die Steuerung so programmiert, dass der zusätzliche Menüpunkt eine Notfall-Reinigungsfunktion zur Reinigung mit herkömmlichem Reinigungsmittel betrifft. Dadurch kann die Bedienung weiter erleichtert und Verwirrung im normalbetrieb verhindert werden, da der Menüpunkt im Normalbetrieb nicht verfügbar sein muss. Dadurch kann eine Bedienperson auch leichter den Unterschied zwischen einem Menüpunkt für die automatische Reinigungsfunktion und dem Menüpunkt für die Notfall-Reinigungsfunktion verstehen. Dadurch kann die Bedienung weiter vereinfacht werden.

Bei einer weiteren vorteilhaften Weiterbildung der erfindungsgemäßen Lösung ist die Steuerung so programmiert, dass im Sondermodus eine manuelle Notfall-Reinigung gestartet werden kann. Dadurch wird der Unterschied zur normalen automatischen Reinigung deutlicher vermittelbar, die im Regelfall automatisch gestartet wird.

Bei einer weiteren vorteilhaften Weiterbildung der erfindungsgemäßen Lösung ist die Steuerung so programmiert, dass die manuelle Notfall-Reinigung ausschließlich im Sondermodus gestartet kann. Dadurch kann der Unterschied zur normalen automatischen Reinigung weiter verdeutlicht werden und klar vermittelt werden, dass die Notfall-Reinigung im Sondermodus tatsächlich für einen Notfall gedacht ist und kein normaler Vorgang ist. Dadurch kann die Bedienung leichter verständlich und somit weiter vereinfacht werden.

Bei einer weiteren vorteilhaften Weiterbildung der erfindungsgemäßen Lösung ist die Steuerung so programmiert, dass die manuelle Notfall-Reinigung ausschließlich im Sondermodus in einem Auswahlmenü zur Auswahl angeboten wird. Dadurch kann vermieden werden, eine Bedienperson unnötiger Weise zu verwirren, die einen neuen, nicht leeren und/oder nicht abgelaufenen Reinigungsmittelbehälter eingesetzt hat, was dem Normalfall entsprechen sollte.

Bei einer weiteren vorteilhaften Weiterbildung der erfindungsgemäßen Lösung ist die Steuerung so programmiert, dass im Sondermodus im Auswahlmenü zur Auswahl angeboten wird, die bisherige Kartusche wiedereinsetzen, die Kartusche zu wechseln, und/oder die Meldung zu Quittieren. Dadurch kann z.B. bei einem nicht vollständigen eingesetzten Reinigungsmittelbehälter, der nur daher nicht erkannt wird, durch erneutes Einsetzten ggf. ein Erfassen erreicht werden, bei einem einfachen Vergessen des Wechsels des Reinigungsmittelbehälters, obwohl ein neuer verfügbar ist, ein Wechsel initiiert werden, oder die Information sicher vermittelt werden, dass ein neuer Reinigungsmittelbehälter zu beschaffen ist.

Bei einer weiteren vorteilhaften Weiterbildung der erfindungsgemäßen Lösung ist die Steuerung so programmiert, dass nach einer manuellen Notfall-Reinigung die gleiche Reichweite bis zu einem erneuten Fällig werden der Reinigung verfügbar ist, wie nach einer automatischen Reinigung. Dadurch kann einerseits verhindert werden, dass durch eine ausbleibende Reinigungstätigkeit eine zu starke und z.B. u.U. irreversibel starke Verkalkung erfolgt und andererseits ausreichend Zeit für die Beschaffung eines neuen Reinigungsmittelbehälters erreicht werden.

Bei einer weiteren vorteilhaften Weiterbildung der erfindungsgemäßen Lösung ist die Steuerung so programmiert, dass im Sondermodus bei und/oder nach dem starten der manuellen Notfall-Reinigung eine Handlungsanleitung zur Anzeige gebracht wird. Besonders da die Notfall-Reinigung im Sondermodus tatsächlich für einen Notfall gedacht und kein normaler Vorgang ist, wird eine Bedienperson mit erforderlichen Bedienschritten der Notfall-Reinigung nicht vertraut sein und eine direkt zur Anzeige gebrachte Handlungsanleitung daher besonders vorteilhaft zu einer einfachen Handhabung beitragen.

Die eingangs genannten Aufgabe wird auch durch ein Computerprogrammprodukt gelöst, das Befehle umfasst, die bei der Ausführung des Programms durch eine Steuerung eines Kaffeeautomaten 1 bewirken, dass die Steuerung gemäß der vorhergehenden Beschreibung programmiert ist. Da das Computerprogrammprodukt auch noch nach einem Kauf des Kaffeeautomaten, der eine Reinigungsvorrichtung mit einer Erfassungsvorrichtung für einen Reinigungsmittelbehälter und eine Steuerung umfasst, über eine Datenschnittstelle und eine App z. B. über das Internet bezogen und in die Steuerung geladen werden kann, ist es im Prinzip möglich, jeden geeigneten bestehenden Automaten in die Lage zu versetzten, die genannten Vorteile nutzten zu können. Daher muss hierfür an Sich nicht extra ein neuer Automat hergestellt werden, was sich besonders vorteilhaft auf die Nachhaltigkeit auswirkt. Insbesondere wird daher ermöglicht, den Bedienkomfort auf besonders nachhaltige Weise zu verbessern.

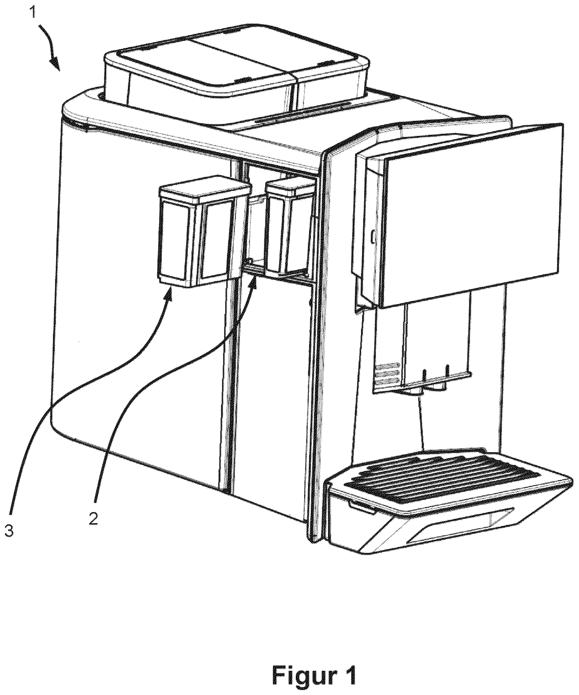

Weitere Vorteile und vorteilhafte Ausgestaltungen ergeben sich aus der im Folgenden in Verbindung mit der einzigen Figur 1 beschriebenen Ausführungsform. Es zeigt:
- Figur 1: einen Kaffeeautomaten 1 mit einer Reinigungsvorrichtung 2 mit einem Reinigungsmittelbehälter 3.

In Figur 1 ist ein Kaffeeautomat 1 mit einer Reinigungsvorrichtung 2, einer Steuerung (nicht dargestellt) und einer Erfassungsvorrichtung (nicht dargestellt) für einen Reinigungsmittelbehälter 3 erkennbar. Die Steuerung ist eingerichtet und programmiert, den Kaffeeautomaten 1 in einem Sondermodus weiter zu betreiben, wenn die Erfassungsvorrichtung keinen oder einen nicht ausreichend gefüllten oder abgelaufenen Reinigungsmittelbehälter 3 erfasst. Dabei ist im Sondermodus ein zusätzlicher Menüpunkt in einem Auswahlmenü verfügbar, die eine Notfall-Reinigungsfunktion zur Reinigung mit herkömmlichem Reinigungsmittel betrifft. Die Steuerung ist dabei so programmiert, dass im Sondermodus eine manuelle Notfall-Reinigung gestartet werden kann - und diese ausschließlich im Sondermodus gestartet kann.

Zusätzlich ist die Steuerung so programmiert, dass im Sondermodus im Auswahlmenü zur Auswahl angeboten wird, die bisherige Kartusche wiedereinsetzen, die Kartusche zu wechseln, oder die Meldung zu Quittieren.

Die Steuerung ist des Weiteren so programmiert, dass im Sondermodus nach dem starten der manuellen Notfall-Reinigung eine Handlungsanleitung zur Anzeige gebracht wird. Nach dem Durchlaufen der manuellen Notfall-Reinigung ist die gleiche Reichweite bis zu einem erneuten fällig werden der Reinigung verfügbar, wie nach einer automatischen Reinigung.

Dies wird dadurch erreicht, dass in die Steuerung ein Computerprogrammprodukt geladen ist, das Befehle umfasst, die bei der Ausführung des Programms durch die Steuerung des Kaffeeautomaten 1 bewirkt, dass die Steuerung gemäß der vorhergehenden Beschreibung programmiert ist. Somit kann der Bedienkomfort auf besonders nachhaltige Weise zu erhöht werden.

Die im Ausführungsbeispiel dargestellten Bestandteile, wie z. B. Reinigungsvorrichtung 2 und der Reinigungsmittelbehälter 3, sowie deren Größenverhältnisse zueinander sind grundsätzlich nicht als maßstabsgerecht anzusehen. Vielmehr können einzelne Elemente zur besseren Darstellbarkeit und/oder zum besseren Verständnis übertrieben dick oder groß dimensioniert dargestellt sein. Die Erläuterung des erfindungsgemäßen Kaffeeautomaten 1 und der Reinigungsvorrichtung 2 anhand der beschriebenen Ausführungsbeispiele ist nicht als Beschränkung der Erfindung auf diese zu betrachten. Vielmehr umfasst die Erfindung jedes neue Merkmal sowie jede Kombination von Merkmalen, auch wenn dieses Merkmal oder diese Kombination selbst nicht explizit in den Patentansprüchen oder den Ausführungsbeispielen angegeben ist.

### BEZUGSZEICHENLISTE

- 1: Kaffeeautomat
- 2: Reinigungsvorrichtung
- 3: Reinigungsmittelbehälter

## Patentansprüche

1. Kaffeeautomat (1) mit einer Reinigungsvorrichtung (2), einer Steuerung und einer Erfassungsvorrichtung für einen Reinigungsmittelbehälter (3), **dadurch gekennzeichnet, dass** die Steuerung eingerichtet und programmiert ist, den Kaffeeautomaten (1) in einem Sondermodus weiter zu betreiben, wenn die Erfassungsvorrichtung keinen oder einen nicht ausreichend gefüllten oder einen abgelaufenen Reinigungsmittelbehälter (3) erfasst.

2. Kaffeeautomat (1) nach Anspruch 1, **dadurch gekennzeichnet, dass** die Steuerung so programmiert ist, dass im Sondermodus zumindest ein zusätzlicher Menüpunkt in einem Auswahlmenü verfügbar ist.

3. Kaffeeautomat (1) nach Anspruch 2, **dadurch gekennzeichnet, dass** die Steuerung so programmiert ist, dass der zusätzliche Menüpunkt eine Notfall-Reinigungsfunktion zur Reinigung mit herkömmlichem Reinigungsmittel betrifft.

4. Kaffeeautomat (1) nach einem der Ansprüche 1 bis 3, **dadurch gekennzeichnet, dass** die Steuerung so programmiert ist, dass im Sondermodus eine manuelle Notfall-Reinigung gestartet werden kann.

5. Kaffeeautomat (1) nach Anspruch 4, **dadurch gekennzeichnet, dass** die Steuerung so programmiert ist, dass die manuelle Notfall-Reinigung ausschließlich im Sondermodus gestartet kann.

6. Kaffeeautomat (1) nach einem der Ansprüche 4 bis 5, **dadurch gekennzeichnet, dass** die Steuerung so programmiert ist, dass die manuelle Notfall-Reinigung ausschließlich im Sondermodus in einem Auswahlmenü zur Auswahl angeboten wird.

7. Kaffeeautomat (1) nach Anspruch 6, **dadurch gekennzeichnet, dass** die Steuerung so programmiert ist, dass im Sondermodus im Auswahlmenü zur Auswahl angeboten wird, die bisherige Kartusche wiedereinsetzen, die Kartusche zu wechseln, und/oder die Meldung zu Quittieren.

8. Kaffeeautomat (1) nach Anspruch 6, **dadurch gekennzeichnet, dass** die Steuerung so programmiert ist, dass nach einer manuellen Notfall-Reinigung die gleiche Reichweite bis zu einem erneuten fällig werden der Reinigung verfügbar ist, wie nach einer automatischen Reinigung.

9. Kaffeeautomat (1) nach Anspruch 4, **dadurch gekennzeichnet, dass** die Steuerung so programmiert ist, dass im Sondermodus bei und/oder nach dem starten der manuellen Notfall-Reinigung eine Handlungsanleitung zur Anzeige gebracht wird.

10. Computerprogrammprodukt, umfassend Befehle, die bei der Ausführung des Programms durch eine Steuerung eines Kaffeeautomaten (1) bewirkt, dass die Steuerung gemäß einem der Ansprüche 1 bis 9 programmiert ist.
